# EUROPÄISCHE PATENTSCHRIFT

(11) **EP 1 719 921 B1**
(45) Veröffentlichungstag und Bekanntmachung des Hinweises auf die Patenterteilung: **03.08.2011**
(21) Anmeldenummer: 06006509.1
(22) Anmeldetag: 29.03.2006
(51) Int. Cl.: F15B 7/00, F16D 48/02

(54) **Zwischen einen Geber- und einen Nehmerzylinder eines hydraulischen Kraftübertragungssystems schaltbare Ventilanordnung zur Schwingungsentkopplung**
Valve assembly for dampening vibrations in a hydraulic drive comprising a master cylinder and a slave cylinder
Assemblage de valves pour amortir les vibrations dans un système d'entraînement hydraulique comprenant un cylindre émetteur et un cylindre récepteur

(30) Priorität: 02.05.2005 DE 102005020853
(43) Veröffentlichungstag der Anmeldung: 08.11.2006
(73) Patentinhaber: FTE automotive GmbH, 96106 Ebern (DE)
(72) Erfinder: Gebert, Stefan, 96242 Sonnefeld (DE); Müller, Oswald, 96106 Ebern (DE); Kopp, Mathias, 96052 Bamberg (DE); Schneier, Jochen, 96199 Zapfendorf (DE)
(74) Vertreter: Oppermann, Mark

(56) Entgegenhaltungen:
- DE-A1- 3 627 865
- DE-A1- 19 650 734
- DE-C1- 10 112 674
- DE-C1- 19 500 908
- DE-C1- 19 540 753
- FR-A- 2 106 937
- GB-A- 2 405 684
- JP-A- 59 089 834
- US-A1- 2005 028 869
- US-B1- 6 216 729

## Beschreibung

### TECHNISCHES GEBIET

Die vorliegende Erfindung bezieht sich auf eine zwischen einen Geber- und einen Nehmerzylinder eines hydraulischen Kraftübertragungssystems schaltbare Ventilanordnung zur Schwingungsentkopplung, gemäß dem Oberbegriff des Patentanspruchs 1, und deren Verwendung in einem hydraulischen Kraftübertragungssystem, gemäß dem Patentanspruch 13. Insbesondere bezieht sich die Erfindung auf eine solche Ventilanordnung, wie sie massenweise in hydraulischen Kupplungsbetätigungen für Kraftfahrzeuge zum Einsatz kommt.

### STAND DER TECHNIK

Eine herkömmliche hydraulische Kupplungsbetätigung hat einen Geberzylinder, der über ein Kupplungspedal betätigt werden kann und an einen Ausgleichsbehälter angeschlossen ist. Der Geberzylinder ist über eine Druckleitung mit einem Nehmerzylinder hydraulisch verbunden, so daß der durch Niedertreten des Kupplungspedals im Geberzylinder erzeugte Druck über die Flüssigkeitssäule in der Druckleitung auf den Nehmerzylinder übertragbar ist. Im Ergebnis wird das Ausrücklager der Kupplung von dem Nehmerzylinder mit einer Betätigungskraft beaufschlagt, um über einen Ausrückmechanismus die Kupplungsdruckplatte von der Kupplungsmitnehmerscheibe und somit den Verbrennungsmotor vom Getriebe des Kraftfahrzeugs zu trennen.

Bei derartigen hydraulischen Kupplungsbetätigungen, die als quasi-stationäre hydraulische Kraftübertragungssysteme betrachtet werden können, bei denen keine kontinuierliche Strömung der Hydraulikflüssigkeit vorliegt, tritt das Problem auf, daß Schwingungen vom Verbrennungsmotor bzw. die Kurbelwelle über die Kupplungsdruckplatte, den Ausrückmechanismus, das Ausrücklager und die Flüssigkeitssäule in der Druckleitung zwischen dem Nehmerzylinder und dem Geberzylinder auf das Kupplungspedal übertragen werden, so daß das Kupplungspedal für den Fahrer wahrnehmbar vibriert, wenn er es zum Ausrücken der Kupplung niedertritt. Dabei werden die Schwingungen am Nehmerzylinder über die Flüssigkeitssäule in der Druckleitung als Druckpulsationen auf den Geberzylinder übertragen.

Im Stand der Technik fehlt es nicht an Vorschlägen, wie dieser Problematik zu begegnen ist. So wurden etwa Vorrichtungen vorgeschlagen (z.B. DE 195 40 753 C1, DE 101 12 674 C1), die mit einer schwingungsfähigen Membran ausgerüstet in die Flüssigkeitssäule zwischen Geber- und Nehmerzylinder geschaltet sind, um darin die Frequenz der Erregerschwingung derart zu modulieren bzw. die Erregerschwingung derart in höherfrequente Bereiche zu verschieben, daß am Ausgang der Vorrichtung bzw. am Geberzylinder eine höherfrequente Schwingung ansteht, der das aus Geberzylinder und Kupplungspedal bestehende schwingungsfähige System aufgrund seiner Trägheit nicht folgen kann, so daß es in Ruhe bleibt.

Auch kann die unerwünschte Schwingüngsübertragung auf den Geberzylinder durch Änderungen am Leitungssystem zwischen dem Nehmerzylinder und dem Geberzylinder vermindert werden. Längere Rohrleitungen führen z.B. zu geringeren Vibrationen, weil infolge des größeren Strömungswiderstands die Dämpfung größer wird. Auch die höhere Masse der Hydraulikflüssigkeit in der längeren Rohrleitung spielt hier eine Rolle. Der Einbau von Blenden oder Drosseln bewirkt ebenfalls einen höheren Strömungswiderstand und somit etwas geringere Vibrationen. Dieser Form von Dämpfung sind jedoch relativ enge Grenzen gesetzt, denn die beschriebenen Maßnahmen bewirken auch eine unerwünschte Vergrößerung der am Kupplungspedal aufzubringenden Kraft bei schneller Betätigung, insbesondere bei niedrigen Temperaturen. Die Rücklaufgeschwindigkeit des Kupplungspedals nimmt bei diesen Maßnahmen ebenfalls in unerwünschter Weise ab, wiederum besonders bei niedrigen Temperaturen, weil das Hydraulikmedium - in der Regel Bremsflüssigkeit - hier bereits relativ zäh ist.

Insbesondere vor diesem Hintergrund entstand die Überlegung, nicht eine weitere Dämpfung in das System zu bringen, sondern eine echte Barriere, die unabhängig von der Temperatur ist. So wurde im Stand der Technik bereits vorgeschlagen (z.B. DE 195 00 908 C1, JP 59-89834 A), in die Flüssigkeitssäule zwischen Geber- und Nehmerzylinder eine in eine geschlossene Stellung vorgespannte Ventilanordnung zu schalten, die bei einer Verschiebung der Flüssigkeitssäule öffnet, bei unbewegter Flüssigkeitssäule hingegen schließt, um - wenigstens bis zu einer vorbestimmten Amplitude der Druckpulsationen in der Flüssigkeitssäule - den Flüssigkeitssäulenabschnitt zwischen Nehmerzylinder und Ventilanordnung schwingungsmäßig von dem Flüssigkeitssäulenabschnitt zwischen Ventilanordnung und Geberzylinder abzuschotten.

In diesem Zusammenhang offenbart die JP 59-89834 A (Fig. 1) eine zwischen einen Geber- und einen Nehmerzylinder einer hydraulischen Kupplungsbetätigung schaltbare Ventilanordnung zur Schwingungsentkopplung, die ein Gehäuse mit einem ersten, an den Geberzylinder anschließbaren Hydraulikanschluß und einem zweiten, an den Nehmerzylinder anschließbaren Hydraulikanschluß aufweist. Zwischen den Hydraulikanschlüssen sind zwei Ventilkörper in dem Gehäuse aufgenommen. Der erste, kolbenartige und mittels eines außenumfangsseitigen Dichtelements gegenüber dem Gehäuse abgedichtete Ventilkörper ist mittels eines ersten Federelements in einer ersten Richtung gegen einen gehäusefesten Anschlag vorgespannt und besitzt einen durch zwei Durchgangsbohrungen ausgebildeten Durchgangsweg für die Hydraulikflüssigkeit. Der zweite, stößelartige Ventilkörper ist mittels eines zweiten Federelements in einer bezüglich der ersten Richtung entgegengesetzten zweiten Richtung gegen einen Ventilsitz am ersten Ventilkörper vorgespannt, so daß der zweite Ventilkörper in einer Grundstellung dieser Ventilanordnung den Durchgangsweg im ersten Ventilkörper im wesentlichen verschließt und bei einem Volumenstrom in der ersten Richtung vom Ventilsitz am ersten Ventilkörper abhebt, um den Durchgangsweg im ersten Ventilkörper für ein Durchströmen der Ventilanordnung zu öffnen.

Bei diesem Stand der Technik bewirkt eine Betätigung des Geberzylinders, genauer die dadurch in der ersten Richtung hervorgerufene Flüssigkeitsströmung durch den ersten Hydraulikanschluß also ein Abheben des zweiten Ventilkörpers gegen die Kraft des zweiten Federelements von dem Ventilsitz am ersten Ventilkörper, der seinerseits durch die Flüssigkeitsströmung und die Federkraft des ersten Federelements gegen den gehäusefesten Anschlag gedrückt wird. Somit kann die Ventilanordnung über den geöffneten Durchgangsweg im ersten Ventilkörper vom Geberzylinder zum Nehmerzylinder hin durchströmt werden.

Um auch ein Durchströmen der Ventilanordnung in der entgegengesetzten Richtung, d.h. vom Nehmerzylinder zum Geberzylinder hin zu ermöglichen, wenn der Geberzylinder entlastet und der Nehmerzylinder infolge der Federkräfte der Kupplung zurückgestellt wird, durchgreift der zweite Ventilkörper der Ventilanordnung den ersten Ventilkörper mit einem Schaft, der in der Grundstellung der Ventilanordnung von dem ersten Ventilkörper in der zweiten Richtung vorsteht, um mit einer weiteren Anschlagfläche am Gehäuse zusammenwirken zu können. Die Rückstellung des Nehmerzylinders, genauer die dadurch in der zweiten Richtung hervorgerufene Flüssigkeitsströmung durch den zweiten Hydraulikanschluß bewirkt nun, unterstützt durch die über den zweiten Ventilkörper auf den ersten Ventilkörper übertragene Kraft des zweiten Federelements, ein Abheben des ersten Ventilkörpers gegen die Kraft des ersten Federelements von dem gehäusefesten Anschlag. Wenn sich der erste Ventilkörper und damit auch der zunächst an dessem Ventilsitz anliegende zweite Ventilkörper in der zweiten Richtung um eine vorbestimmte Wegstrecke von dem gehäusefesten Anschlag wegbewegt hat, kommt der Schaft des zweiten Ventilkörpers mit seiner Stirnfläche an der weiteren Anschlagfläche am Gehäuse zur Anlage. Hierdurch wird die Bewegung des zweiten Ventilkörpers gestoppt, während sich der erste Ventilkörper gegen die Kraft des ersten Federelements weiter in der zweiten Richtung bewegt. In der Folge hebt der von der weiteren Anschlagfläche am Gehäuse angehaltene zweite Ventilkörper von dem Ventilsitz an dem ersten Ventilkörper ab, wodurch der Durchgangsweg im ersten Ventilkörper wieder geöffnet wird, über den die Ventilanordnung nun vom Nehmerzylinder zum Geberzylinder hin durchströmt werden kann.

Wenngleich diese vorbekannte Ventilanordnung einen vergleichsweise einfachen und kompakten Aufbau besitzt, ist sie in funktioneller Hinsicht noch verbesserungsbedürftig. Zum einen sind mit dem am Außenumfang des ersten Ventilkörpers vorgesehenen Dichtelement erhebliche Reibungsverluste verbunden, was sich insbesondere auf die Rücklaufgeschwindigkeit des Kupplungspedals negativ auswirken kann. Zum anderen kann es am Ende des Einkuppelvorgangs zu einer erheblichen Verzögerung kommen, bis die vorbekannte Ventilanordnung ihre schwingungsabschottende Wirkung entfaltet: Nachdem die Flüssigkeitssäule unter Öffnung der Ventilanordnung vom Nehmerzylinder in Richtung des Geberzylinders zurückgeschoben wurde, bewirkt das erste Federelement eine Rückstellbewegung des ersten Ventilkörpers in der ersten Richtung, d.h. in Richtung des gehäusefesten Anschlags. Bevor der erste Ventilkörper den gehäusefesten Anschlag erreicht, kommt der Schaft des zweiten Ventilkörpers jedoch von der weiteren Anschlagfläche am Gehäuse frei, so daß der zweite, von dem zweiten Federelement gegengehaltene Ventilkörper wieder an dem Ventilsitz des ersten Ventilkörpers zur Anlage gelangt und den Durchgangsweg im ersten Ventilkörper verschließt. In der Folge kann aufgrund der Federkraft des ersten Federelements im Flüssigkeitssäulenabschnitt zwischen der jetzt geschlossenen Ventilanordnung und dem Nehmerzylinder ein Restdruck entstehen, der die Rücklaufbewegung des ersten Ventilkörpers auf den gehäusefesten Anschlag behindert bzw. der erst abgebaut werden muß, bevor der erste Ventilkörper wieder auf dem gehäusefesten Anschlag zur Anlage gelangen kann. Solange der erste Ventilkörper aber noch nicht gegen den gehäusefesten Anschlag gedrückt wird, können die Ventilkörper mit den Druckpulsationen in der Flüssigkeitssäule zwischen dem Nehmerzylinder und dem Geberzylinder mitschwingen, so daß über den Nehmerzylinder in die Flüssigkeitssäule induzierte Schwingungen von der Ventilanordnung nicht abgeschottet, sondern auf den Geberzylinder und damit das Kupplungspedal übertragen werden.

Eine weitere Ventilanordnung zur Schwingungsentkopplung ist aus der den Oberbegriff des Patentanspruchs 1 bildenden FR 2 106 937 A bekannt.

Der Erfindung liegt die Aufgabe zugrunde, eine zwischen einen Geber- und einen Nehmerzylinder eines hydraulischen Kraftübertragungssystems schaltbare, möglichst einfach und kompakt ausgebildete Ventilanordnung zur Schwingungsentkopplung zu schaffen, die einerseits einen möglichst geringen Widerstand gegen eine Verschiebung der Flüssigkeitssäule zwischen dem Geber- und dem Nehmerzylinder aufweist und andererseits - verglichen mit dem obigen Stand der Technik - eine Schwingungsübertragung vom Nehmerzylinder auf den Geberzylinder wirksamer zu unterbinden vermag.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 16.

### DARSTELLUNG DER ERFINDUNG

Gemäß der Erfindung ist bei einer zwischen einen Geber- und einen Nehmerzylinder eines hydraulischen Kraftübertragungssystems schaltbaren Ventilanordnung zur Schwingungsentkopplung, die ein Gehäuse hat, das einen ersten und einen zweiten Hydraulikanschluß aufweist, und zwei Ventilkörper besitzt, welche zwischen den Hydraulikanschlüssen in dem Gehäuse aufgenommen sind, wobei der erste Ventilkörper mittels eines ersten Federelements in einer ersten Richtung gegen einen gehäusefesten Anschlag vorgespannt ist und einen Durchgangsweg für die Hydraulikflüssigkeit aufweist, während der zweite Ventilkörper mittels eines zweiten Federelements in einer bezüglich der ersten Richtung entgegengesetzten zweiten Richtung gegen einen Ventilsitz am ersten Ventilkörper vorgespannt ist, so daß der zweite Ventilkörper in einer Grundstellung der Ventilanordnung den Durchgangsweg im ersten Ventilkörper vollständig oder nahezu vollständig verschließt und bei einem Volumenstrom in der ersten Richtung vom Ventilsitz abhebt, um den Durchgangsweg für ein Durchströmen der Ventilanordnung zu öffnen, wobei zwischen dem ersten Ventilkörper und dem Gehäuse ein weiterer Durchgangsweg für die Hydraulikflüssigkeit vorgesehen ist und wobei am gehäusefesten Anschlag ein weiterer Ventilsitz ausgebildet ist, gegen den der erste Ventilkörper vorgespannt ist, so daß der erste Ventilkörper in der Grundstellung der Ventilanordnung den weiteren Durchgangsweg vollständig oder nahezu vollständig verschließt und bei einem Volumenstrom in der zweiten Richtung vom weiteren Ventilsitz abhebt, um den weiteren Durchgangsweg für ein Durchströmen der Ventilanordnung zu öffnen; dem ersten oder dem zweiten Ventilkörper benachbart ein Volumenaufnehmer in einer Bohrung des Gehäuses montiert, der unter Druck elastisch verformbar ist, um Restschwingungen zu reduzieren.

Durch Vorsehen des weiteren Durchgangswegs für die Hydraulikflüssigkeit, der infolge seiner (Außen)Lage zwischen dem ersten Ventilkörper und dem Gehäuse leicht mit einem besonders großen Querschnitt ausgeführt werden kann, um der Flüssigkeitsströmung in der zweiten Richtung nur einen vorteilhaft geringen Widerstand entgegenzusetzen, sowie des weiteren Ventilsitzes am gehäusefesten Anschlag, welcher im Zusammenwirken mit dem federvorgespannten ersten Ventilkörper den weiteren Durchgangsweg vollständig oder nahezu vollständig verschließt (Grundstellung der Ventilanordnung) bzw. bei einem Volumenstrom in der zweiten Richtung freigibt, wird auf einfache Weise bewirkt, daß keiner der Ventilkörper erst einen vorbestimmten Weg zurücklegen muß, bevor der jeweilige Ventilsitz geöffnet wird. Aufgrund dieser "ansprechweglosen" Ausgestaltung der Ventilanordnung ist gewährleistet, daß sich bei dem Rücklauf des jeweiligen Ventilkörpers unter der Kraft des jeweils zugeordneten Federelements kein übermäßiger Restdruck im jeweiligen Flüssigkeitssäulenabschnitt aufbaut, der ein Zurückkehren des jeweiligen Ventilkörpers in seine Grundstellung verzögert. Mit anderen Worten gesagt öffnet die erfindungsgemäße Ventilanordnung bei einem Volumenstrom - unabhängig von dessen Richtung - sofort und schließt umgehend bei einer Unterbrechung des Volumenstroms, so daß die Ventilkörper stets zum Gehäuse der Ventilanordnung "geerdet" sind, wenn die Flüssigkeitssäule nicht bewegt wird, und somit Druckpulsationen in dem einen, nehmerzylinderseitigen Flüssigkeitssäulenabschnitt von dem anderen, geberzylinderseitigen Flüssigkeitssäulenabschnitt im wesentlichen fernhalten.

Darüber hinaus entfällt bei der erfindungsgemäßen Ventilanordnung das im obigen Stand der Technik zwischen dem ersten Ventilkörper und dem Gehäuse vorgesehene Dichtelement, so daß die damit verbundenen Reibungsverluste, die sich insbesondere auf die Rücklaufgeschwindigkeit des Kupplungspedals negativ auswirken können, bei der erfindungsgemäßen Ventilanordnung in vorteilhafter Weise nicht auftreten.

Da dem ersten oder dem zweiten Ventilkörper benachbart ein Volumenaufnehmer in einer Bohrung des Gehäuses der Ventilanordnung montiert ist, der unter Druck elastisch verformbar ist, werden Restschwingungen gedämpft bzw. reduziert. Solche Restschwingungen können auftreten, wenn die Druckamplituden der Druckpulsationen in der Flüssigkeitssäule, namentlich in dem Flüssigkeitssäulenabschnitt zwischen dem Nehmerzylinder und der Ventilanordnung, größer sind als der von der Federkraft des jeweiligen Federelements und der hydraulischen Wirkfläche des jeweiligen Ventilkörpers abhängige Öffnungsdruck der Ventilanordnung. Ein kleiner Anteil an Restschwingungen könnte zudem über eine an einem Ventilsitz und/oder einem Ventilkörper ggf. ausgebildete Ausgleichsnut übertragen werden, die bei einer etwaigen Vakuumdruckbefüllung des hydraulischen Kraftübertragungssystems sicherstellen soll, daß ein Vakuum gezogen werden kann.

Schließlich ist ein solcher Volumenaufnehmer auch schwingungsreduzierend wirksam, wenn infolge einer Verschiebung der Flüssigkeitssäule zwischen Geberzylinder und Nehmerzylinder, d.h. im Falle einer hydraulischen Kupplungsbetätigung beim Aus- oder Einrücken der Kupplung die Ventilanordnung geöffnet ist, so daß Druckpulsationen durch diese hindurchlaufen können.

Vorzugsweise sind die Dichtflächen der Ventilsitze derart bezüglich der Verschieberichtungen der Ventilkörper angeordnet, daß die Dichtfläche des (ersten) Ventilsitzes und/oder die Dichtfläche des weiteren Ventilsitzes senkrecht zu der Verschieberichtung des ersten bzw. zweiten Ventilkörpers steht, so daß bei einer Verschiebung des jeweiligen Ventilkörpers ein möglichst großer Durchströmquerschnitt zwischen dem jeweiligen Ventilkörper und dem zugeordneten Ventilsitz freigegeben wird, um hier für einen möglichst kleinen Strömungswiderstand zu sorgen. Wenn hierbei die Dichtfläche des (ersten) Ventilsitzes und die Dichtfläche des weiteren Ventilsitzes in der Grundstellung der Ventilanordnung in einer Ebene liegen, ergibt sich eine in axialer Richtung vorteilhaft kompakte Ventilanordnung.

Im Hinblick auf insbesondere eine einfache Montage der Ventilanordnung ist es bevorzugt, wenn das Gehäuse der Ventilanordnung zweigeteilt ist, mit einem Grundteil und einem darin gesicherten Einsteckteil, wobei die Ventilkörper und die Federelemente zwischen dem Grundteil und dem Einsteckteil angeordnet sind. Dabei kann vorteilhaft das Einsteckteil mit einer Stirnfläche den gehäusefesten Anschlag für den ersten Ventilkörper ausbilden, so daß hierfür keine weiteren Bauteile vorzusehen bzw. Maßnahmen zu treffen sind.

Grundsätzlich ist es denkbar, den zweiten - wie den ersten - Ventilkörper am Gehäuse der Ventilanordnung zu führen. Insbesondere im Hinblick auf einen geringen Bauraumbedarf bevorzugt ist jedoch eine Ausgestaltung, bei der der zweite Ventilkörper am ersten Ventilkörper geführt ist. Hierbei kann der zweite Ventilkörper in einer insbesondere fertigungstechnisch einfachen Ausgestaltung außenumfangsseitig mit einer Mehrzahl von Stegen versehen sein, die der Führung des zweiten Ventilkörpers in einer Bohrung des ersten Ventilkörpers dienen und - zugleich - zusammen mit der Wandung der Ventilkörperbohrung den (ersten) Durchgangsweg begrenzen.

Ebenso kann der erste Ventilkörper außenumfangsseitig mit einer Mehrzahl von Rippen versehen sein, die der Führung des ersten Ventilkörpers in einer Bohrung des Gehäuses dienen und - zugleich - zusammen mit der Wandung der Gehäusebohrung den weiteren Durchgangsweg begrenzen, was sich ebenfalls fertigungstechnisch einfach realisieren läßt.

Prinzipiell sind verschiedene Federarten (u.a. Tellerfedern) und Wirkrichtungen (Druck bzw. Zug) für die Federelemente der Ventilanordnung denkbar. Insbesondere aus Kostengründen bevorzugt ist es jedoch, wenn es sich bei dem ersten Federelement und/oder dem zweiten Federelement um eine Schraubendruckfeder handelt.

Grundsätzlich können die Hauptteile der Ventilanordnung aus einem metallischen Werkstoff, beispielsweise einer Aluminiumlegierung, etwa durch spanende Bearbeitung hergestellt werden. Insbesondere dem Erhalt einer kostengünstigen Ventilanordnung förderlich ist es aber, wenn das Gehäuse bzw. dessen Teile und/oder der erste Ventilkörper und/oder der zweite Ventilkörper aus Kunststoff spritzgegossen ist.

Vorzugsweise handelt es sich bei dem Volumenaufnehmer um ein gummielastisches, spulenförmiges Element, mit einer eine Durchströmung des Volumenaufnehmers ermöglichenden Durchgangsbohrung und einer außenumfangsseitigen Ringaussparung, die zusammen mit einer Innenumfangsfläche der Gehäusebohrung eine ringförmige Luftkammer begrenzt. Bei einer solchen Ausgestaltung des Volumenaufnehmers wird, wenn eine Druckamplitude durch die Durchgangsbohrung hindurchläuft, das spulenförmige Element gegen die Federwirkung des gummielastischen Materials verformt, wobei das Luftvolumen in der ringförmigen Luftkammer komprimiert wird, so daß das spulenförmige Element - wie der Begriff "Volumenaufnehmer" schon impliziert - im Bereich der Durchgangsbohrung eine definierte Aufweitung erfährt, die zu einer gewissen "Entlastung" der Druckamplitude führt. Hierbei sorgt die Federwirkung des gummielastischen Materials und des komprimierten Luftvolumens für eine automatische Rückstellung des spulenförmigen Elements in seine Ausgangsform, wenn der im Bereich der Durchgangsbohrung des spulenförmigen Elements vorliegende Druck in der Flüssigkeitssäule einen vorbestimmten Wert unterschreitet.

Um die Montage des Volumenaufnehmers zu vereinfachen, namentlich eine ungerichtete Montage zu ermöglichen, kann der Volumenaufnehmer bezüglich einer Längsachse rotationssymmetrisch und bezüglich einer gedachten, zu der Längsachse senkrechten Ebene spiegelsymmetrisch ausgebildet sein.

Bei Verwendung in einem hydraulischen Kraftübertragungssystem mit einem Geberzylinder, der über eine Hydraulikleitung mit einem Nehmerzylinder hydraulisch verbunden ist, kann die erfindungsgemäße Ventilanordnung derart in die Hydraulikleitung geschaltet sein, daß der erste Hydraulikanschluß der Ventilanordnung mit dem Geberzylinder und der zweite Hydraulikanschluß der Ventilanordnung mit dem Nehmerzylinder hydraulisch verbunden ist. Die vorgeschlagene Ventilanordnung kann aber auch umgedreht eingebaut werden, so daß der erste Hydraulikanschluß mit dem Nehmerzylinder und der zweite Hydraulikanschluß mit dem Geberzylinder verbunden ist, insbesondere wenn die Auslegung der Federkräfte der Federelemente und der hydraulischen Wirkflächen der Ventilkörper so getroffen ist, daß die Öffnungsdrücke der Ventilanordnung in beiden Durchströmungsrichtungen der Ventilanordnung gleich sind.

Wie Untersuchungen der Anmelderin gezeigt haben, ist bei einer herkömmlichen hydraulischen Kupplungsbetätigung ohne zwischengeschaltete Ventilanordnung die Druckamplitude der Druckpulsationen in der Flüssigkeitssäule zwischen Nehmerzylinder und Geberzylinder am Geberzylinder in der Regel geringer als am Nehmerzylinder. Dies gilt vor allem im Resonanzfall. Es scheint daher angebracht, die erfindungsgemäße Ventilanordnung in der Nähe des Geberzylinders einzusetzen. Es wurde jedoch festgestellt, daß sich das schwingungstechnische Systemverhalten durch den Einsatz einer erfindungsgemäßen Ventilanordnung fundamental ändert. Bei einer herkömmlichen hydraulischen Kupplungsbetätigung ohne Ventilanordnung mündete die Hydraulikleitung in den vergleichsweise voluminösen, "weichen" Geberzylinder, so daß sich hier keine großen Druckamplituden aufbauen konnten; der Geberzylinder wirkte quasi als "offenes Ende" der Hydraulikleitung. Bei der Ventilanordnung handelt es sich jedoch um ein geschlossenes Ende der Hydraulikleitung solange die Ventilanordnung geschlossen bleibt, was zur Schwingungsentkopplung bzw. -abschottung ja erwünscht ist. An einem geschlossenen Ende aber treten erfahrungsgemäß gerade die höchsten Druckamplituden auf. Insofern ist es in der Regel bevorzugt, wenn die Ventilanordnung näher am Nehmerzylinder als am Geberzylinder in die Hydraulikleitung geschaltet ist. Wenn bei einem gegebenen Leitungssystem Resonanzeffekte allerdings nicht zu befürchten sind, kann doch der Einsatz der Ventilanordnung nahe dem Geberzylinder von Vorteil sein, denn dann könnte es durch die Dämpfung infolge der Länge der Hydraulikleitung zwischen Nehmerzylinder und Ventilanordnung nahe dem Geberzylinder etwas geringere Druckamplituden geben als am Nehmerzylinder.

Im Hinblick auf die Einbausituation der Ventilanordnung in ihrer Verwendung in einem hydraulischen Kraftübertragungssystem kann der Aufbau ferner so gestaltet sein, daß der weiter oben angesprochene Volumenaufnehmer zwischen dem Nehmerzylinder und den Ventilkörpern im Gehäuse der Ventilanordnung angeordnet ist, so daß der Volumenaufnehmer aus Sicht der Druckpulsationen, die vom Nehmerzylinder her ankommen, vor den Ventilkörpern sitzt. Dies hat den Vorteil, daß an dieser Stelle, an der große Druckamplituden auftreten, diese infolge der Elastizität des Volumenaufnehmers etwas abgemildert werden können. Alternativ dazu - oder in Ergänzung dazu, nämlich bei einem Einsatz von zwei Volumenaufnehmern, von denen der eine vor und der andere hinter den Ventilkörpern sitzt - kann der Aufbau schließlich auch so getroffen sein, daß der Volumenaufnehmer zwischen dem Geberzylinder und den Ventilkörpern im Gehäuse der Ventilanordnung angeordnet ist. Dies hat zum einen den Vorteil, daß, wenn die Druckamplituden größer sind als der Öffnungsdruck der Ventilanordnung, was zu einem kurzen Öffnen der Ventilanordnung führen kann, der durch die Ventilanordnung hindurchlaufende "Überschuß" der Druckamplitude vermindert werden kann; zum anderen, daß Restschwingungen, die durch eine etwa vorhandene Ausgleichsnut hindurchlaufen, verringert werden können.

### KURZE BESCHREIBUNG DER ZEICHNUNGEN

Im folgenden wird die Erfindung anhand eines bevorzugten Ausführungsbeispiels unter Bezugnahme auf die beigefügten, teilweise schematischen Zeichnungen näher erläutert, in denen elastomere Teile zur Vereinfachung der Darstellung im unverformten Zustand gezeigt sind. In den Zeichnungen zeigen:
- Fig. 1: eine prinzipielle Darstellung einer hydraulischen Kupplungsbetätigung, bei der in eine Druckleitung zwischen einem Geberzylinder und einem Nehmerzylinder eine erfindungsgemäße Ventilanordnung zur Schwingungsentkopplung geschaltet ist,
- Fig. 2: eine gegenüber der Darstellung in Fig. 1 etwas vergrößerte Längsschnittansicht der in Fig. 1 gezeigten Ventilanordnung im geschlossenen Zustand,
- Fig. 3: eine Längsschnittansicht der Ventilanordnung gemäß Fig. 2 im geschlossenen Zustand, die gegenüber der Darstellung in Fig. 2 um 45° um ihre Längsachse gedreht wurde,
- Fig. 4: eine Längsschnittansicht der Ventilanordnung gemäß Fig. 2, die sich von der in Fig. 2 dargestellten Ventilanordnung dahingehend unterscheidet, daß sie in einem von unten durchströmten Zustand dargestellt ist, in der ein erster Ventilkörper von einem zugeordneten Ventilsitz an einem gehäusefesten Anschlag abgehoben ist,
- Fig. 5: eine Längsschnittansicht der Ventilanordnung gemäß Fig. 4, die gegenüber der Darstellung in Fig. 4 um 45° um ihre Längsachse gedreht wurde,
- Fig. 6: eine Längsschnittansicht der Ventilanordnung gemäß Fig. 2, die sich von der in Fig. 2 dargestellten Ventilanordnung dahingehend unterscheidet, daß sie in einem von oben durchströmten Zustand dargestellt ist, in der ein zweiter Ventilkörper von einem zugeordneten Ventilsitz am ersten Ventilkörper abgehoben ist,
- Fig. 7: eine Längsschnittansicht der Ventilanordnung gemäß Fig. 6, die gegenüber der Darstellung in Fig. 6 um 45° um ihre Längsachse gedreht wurde,
- Fig. 8: eine Schnittansicht der Ventilanordnung gemäß Fig. 2 entsprechend der Schnittverlaufslinie VIII-VIII in Fig. 2,
- Fig. 9: eine stark vergrößerte Darstellung des Details IX in Fig. 3, die eine Ausgleichsnut im ersten Ventilkörper zeigt,
- Fig. 10: eine gegenüber der Darstellung in den Fig. 2 bis 7 vergrößerte Längsschnittansicht eines Grundteils des Gehäuses der Ventilanordnung gemäß Fig. 2,
- Fig. 11: eine Schnittansicht des Grundteils des Gehäuses der Ventilanordnung gemäß Fig. 2 entsprechend der Schnittverlaufslinie XI-XI in Fig. 10,
- Fig. 12: eine gegenüber der Darstellung in den Fig. 2 bis 7 vergrößerte Längsschnittansicht eines Einsteckteils des Gehäuses der Ventilanordnung gemäß Fig. 2,
- Fig. 13: eine gegenüber der Darstellung in den Fig. 2 bis 7 vergrößerte, perspektivische Darstellung eines ersten Ventilkörpers der Ventilanordnung gemäß Fig. 2,
- Fig. 14: eine Seitenansicht des ersten Ventilkörpers gemäß Fig. 13,
- Fig. 15: eine Schnittansicht des ersten Ventilkörpers gemäß Fig. 13 entsprechend der Schnittverlaufslinie XV-XV in Fig. 14,
- Fig. 16: eine Unteransicht des ersten Ventilkörpers gemäß Fig. 13 von unten in Fig. 14,
- Fig. 17: eine gegenüber der Darstellung in den Fig. 2 bis 7 vergrößerte, perspektivische Darstellung eines zweiten Ventilkörpers der Ventilanordnung gemäß Fig. 2,
- Fig. 18: eine Seitenansicht des zweiten Ventilkörpers gemäß Fig. 17,
- Fig. 19: eine Draufsicht auf den zweiten Ventilkörper gemäß Fig. 17 von oben in Fig. 18,
- Fig. 20: eine Schnittansicht des zweiten Ventilkörpers gemäß Fig. 17 entsprechend der Schnittverlaufslinie XX-XX in Fig. 18,
- Fig. 21: eine gegenüber der Darstellung in den Fig. 2 bis 7 vergrößerte, perspektivische Darstellung eines spulenförmigen, elastomeren Volumenaufnehmers der Ventilanordnung gemäß Fig. 2,
- Fig. 22: eine Längsschnittansicht des Volumenaufnehmers gemäß Fig. 21 und

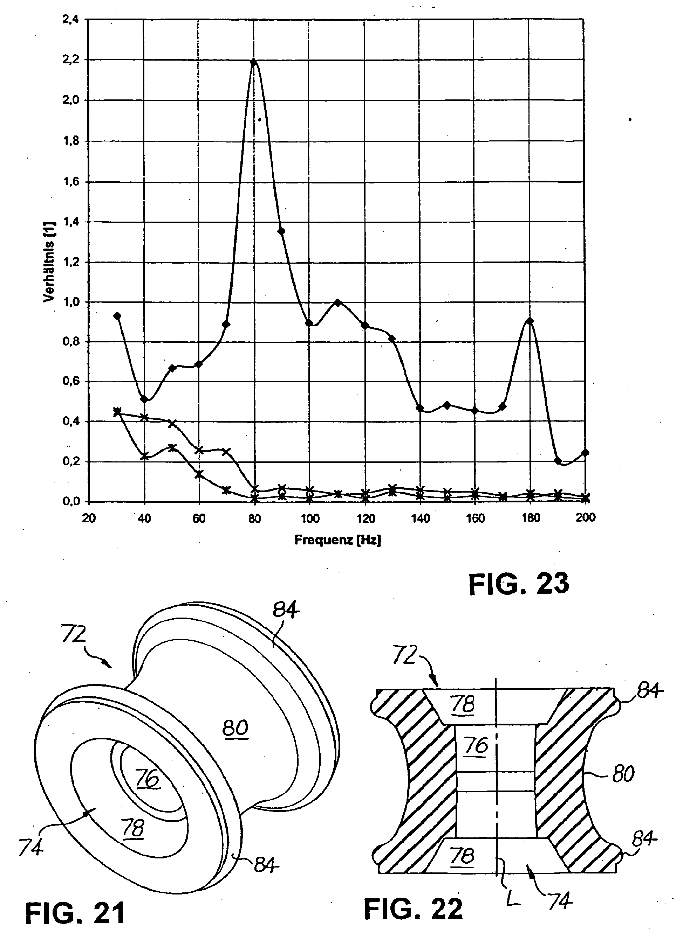

- Fig. 23: ein Diagramm, in dem für eine hydraulische Kupplungsbetätigung ohne erfindungsgemäße Ventilanordnung (Rautenmarkierung), eine hydraulische Kupplungsbetätigung mit Ventilanordnung ohne Volumenaufnehmer (Kreuzmarkierung) sowie eine hydraulische Kupplungsbetätigung mit erfindungsgemäßer Ventilanordnung und Volumenaufnehmer (längsgekreuzte Kreuzmarkierung) das Verhältnis der an einer Kolbenstange des Geberzylinders gemessenen Beschleunigung zu der an einer Kolbenstange des Nehmerzylinders gemessenen Beschleunigung über der Frequenz aufgetragen ist, als Ergebnis eines Versuchs, bei dem eine Sinusschwingung mit variabler Frequenz und einer Amplitude von 1 g (9,81 m/s²) an die Kolbenstange des Nehmerzylinder angelegt wurde.

### DETAILLIERTE BESCHREIBUNG DES AUSFÜHRUNGSBEISPIELS

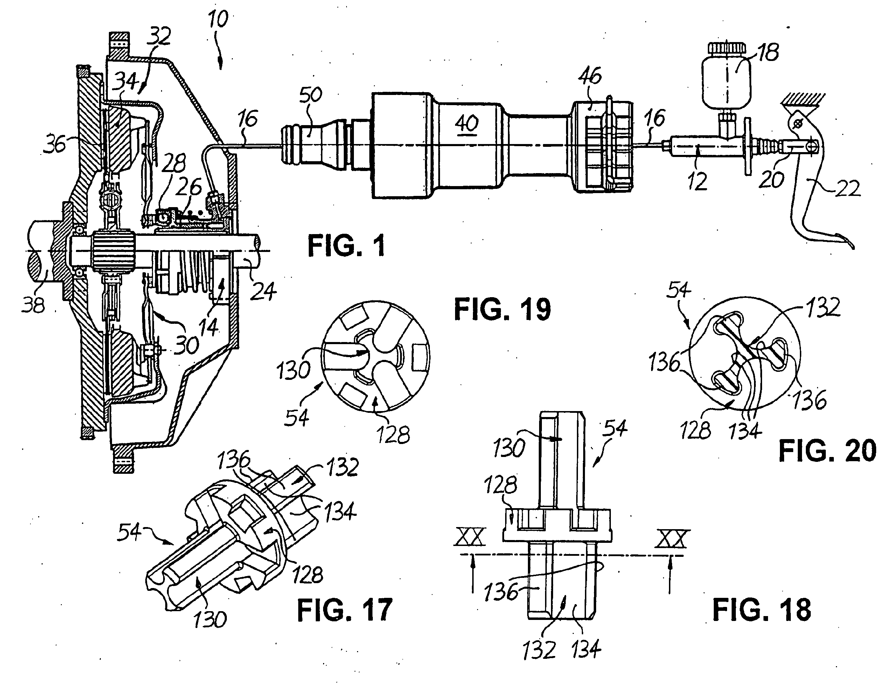

In Fig. 1 ist beispielhaft für ein hydraulisches Kraftübertragungssystem eine hydraulische Kupplungsbetätigung 10 für Kraftfahrzeuge gezeigt, welche in an sich bekannter Weise einen Geberzylinder 12 und einen Nehmerzylinder 14 aufweist, die über eine Hydraulikleitung 16 hydraulisch miteinander verbunden sind. Der nicht dargestellte Kolben des an einen Ausgleichsbehälter 18 angeschlossenen Geberzylinders 12 ist über eine Kolbenstange 20 mit einem Kupplungspedal 22 wirkverbunden, so daß der Geberzylinder 12 durch Niedertreten des Kupplungspedals 22 betätigt werden kann. Hierbei wird in Richtung des Nehmerzylinders 14 eine Flüssigkeitssäule durch die Hydraulikleitung 16 hindurchgeschoben, die den Nehmerzylinder 14 hydraulisch beaufschlagt. Der Nehmerzylinder 14, im dargestellten Ausführungsbeispiel ein aufgrund seiner konzentrischen Anordnung zu einer Getriebewelle 24 auch "Zentralausrücker" genannter Ringzylinder, genauer dessen Ringkolben 26 steht über ein Ausrücklager 28 mit einem Ausrückmechanismus 30 einer Reibungskupplung 32 in Wirkverbindung, so daß, wenn der Nehmerzylinder 14 zum Ausrücken der Reibungskupplung 32 hydraulisch beaufschlagt wird, vermittels des Ausrückmechanismus 30 eine Kupplungsdruckplatte 34 von einer Kupplungsmitnehmerscheibe 36 der Reibungskupplung 32 und somit der Verbrennungsmotor (nicht gezeigt) vom Getriebe (ebenfalls nicht dargestellt) des Kraftfahrzeugs getrennt wird.

Wird das Kupplungspedal 22 entlastet, um die Reibungskupplung 32 wieder einzurücken, wird der Nehmerzylinder 14, genauer dessen Ringkolben 26 infolge u.a. der Federkräfte der Reibungskupplung 32 wieder in seine Grund- bzw. Ausgangsstellung zurückgebracht, wobei die oben erwähnte Flüssigkeitssäule durch die Hydraulikleitung 16 hindurch wieder zurück in Richtung des Geberzylinders 12 geschoben wird. Der weitere Aufbau und die weitere Funktion einer solchen hydraulischen Kupplungsbetätigung 10 sind Fachleuten hinreichend bekannt, so daß detailliertere Erläuterungen hierzu an dieser Stelle entbehrlich sind.

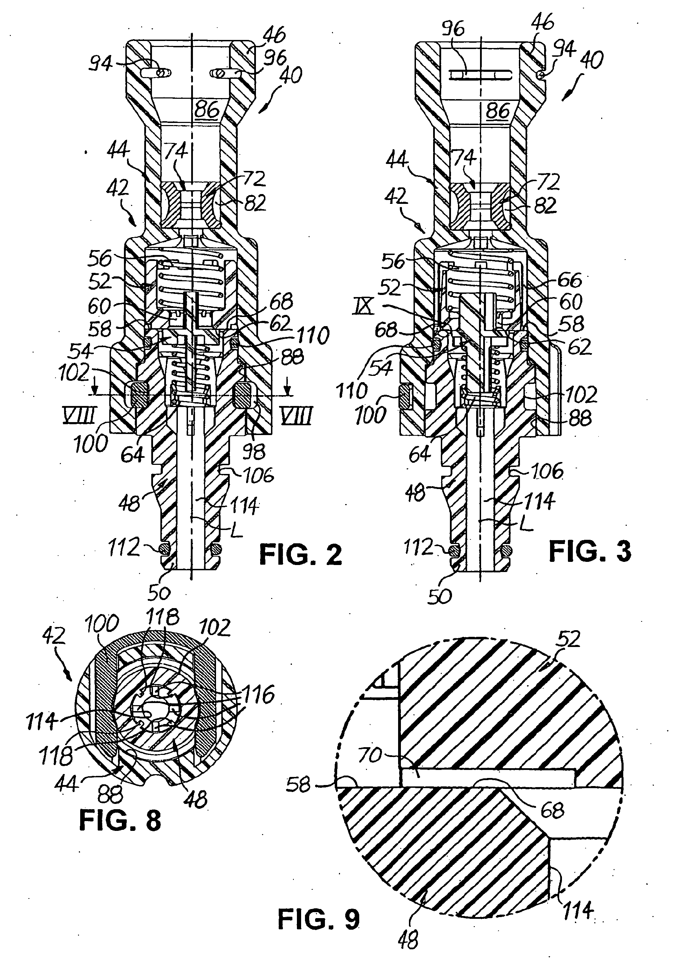

Bei einer solchen hydraulischen Kupplungsbetätigung 10 werden Schwingungen vom Verbrennungsmotor (nicht gezeigt), insbesondere dessen Kurbelwelle 38 über die Bauteile der Reibungskupplung 32 und den Nehmerzylinder 14 in die sich in der Hydraulikleitung 16 befindende Flüssigkeitssäule zwischen Nehmerzylinder 14 und Geberzylinder 12 übertragen, in der sie sich als Druckpulsationen fortpflanzen. Um diese Druckpulsationen von dem Geberzylinder 12 und damit dem Kupplungspedal 22 fernzuhalten, an dem sie von der Bedienperson insbesondere dann zu empfinden wären, wenn der Fuß auf dem Kupplungspedal 22 in typisch städtischer Fahrweise abgestützt wird - sogenanntes "Anlegekribbeln" - oder das durchgetretene Kupplungspedal 22 z.B. vor einer Ampel gehalten wird, ist in die Hydraulikleitung 16 zwischen Geberzylinder 12 und Nehmerzylinder 14 eine in eine geschlossene Stellung vorgespannte Ventilanordnung 40 geschaltet, die nachfolgend unter Bezugnahme auf die Fig. 2 bis 23 noch näher erläutert werden wird. Die als "doppeltwirkendes" Vordruckventil ausgebildete Ventilanordnung 40 öffnet bei jeder Verschiebung der Flüssigkeitssäule, d.h. sowohl bei einer Verschiebung in Richtung Nehmerzylinder 14 als auch bei einer Verschiebung in Richtung Geberzylinder 12, und schließt bei unbewegter Flüssigkeitssäule, um den Flüssigkeitssäulenabschnitt zwischen dem Nehmerzylinder 14 und der Ventilanordnung 40 schwingungsmäßig von dem Flüssigkeitssäulenabschnitt zwischen der Ventilanordnung 40 und dem Geberzylinder 12 abzuschotten bzw. besagte Flüssigkeitssäulenabschnitte schwingungsmäßig zu entkoppeln, zumindest soweit die Druckamplitude der Druckpulsationen in der Flüssigkeitssäule einen vorbestimmten Wert nicht überschreitet.

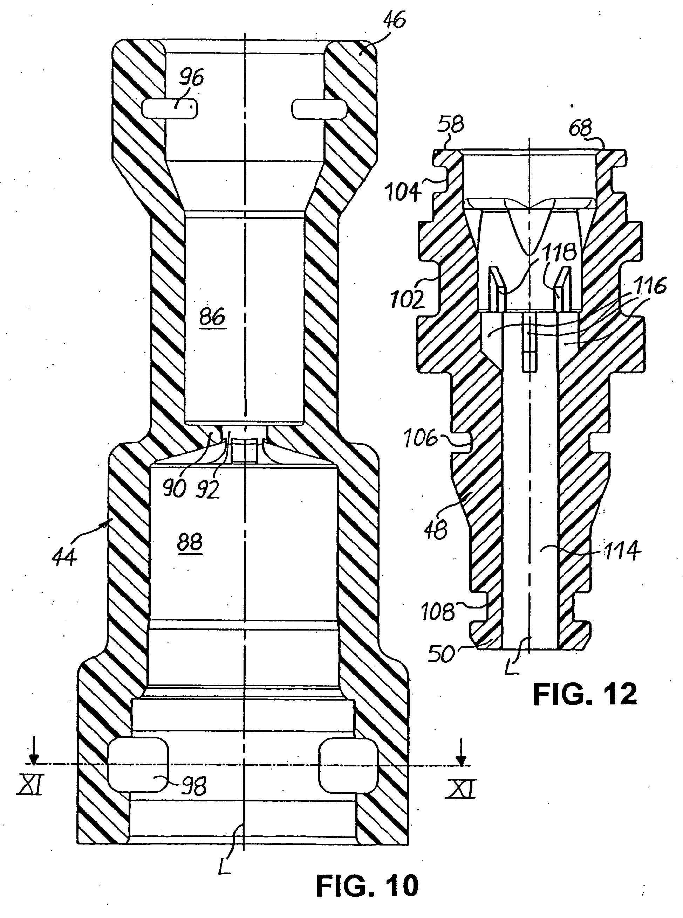

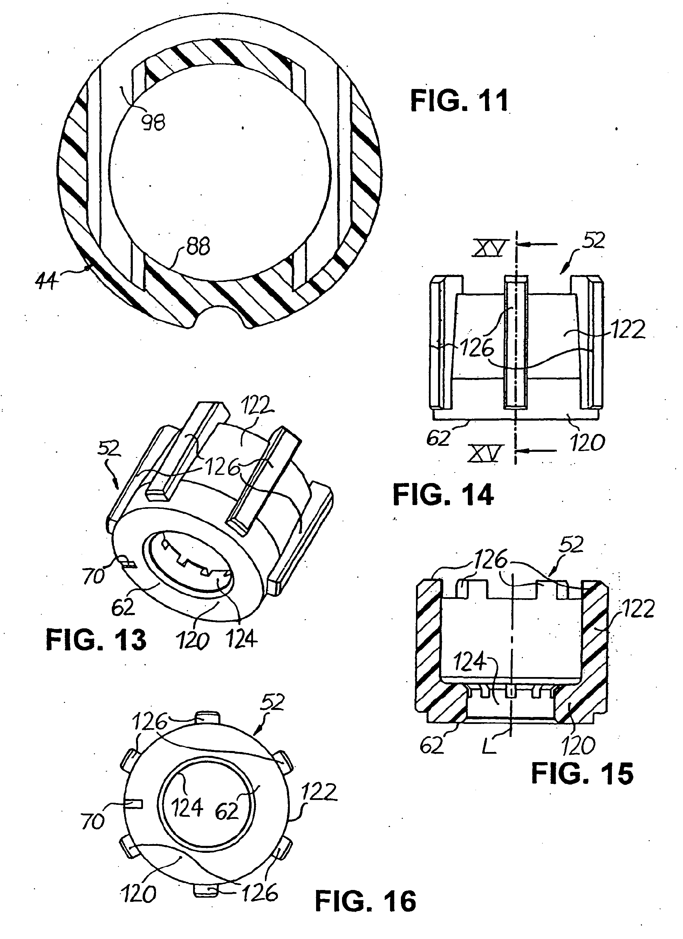

Gemäß den Fig. 2 bis 7 weist die Ventilanordnung 40 ein zweigeteiltes Gehäuse 42 auf, mit einem Grundteil 44 (in den Fig. 10 und 11 einzeln gezeigt), das einen ersten Hydraulikanschluß 46 hat, und einem im Grundteil 44 gesicherten Einsteckteil 48 (in Fig. 12 separat dargestellt), welches einen zweiten Hydraulikanschluß 50 ausbildet. Im Anordnungsbeispiel gemäß Fig. 1 ist die Ventilanordnung 40 über den ersten Hydraulikanschluß 46 hydraulisch mit dem Geberzylinder 12 verbunden, während der zweite Hydraulikanschluß 50 der hydraulischen Verbindung zum Nehmerzylinder 14 dient. Die Ventilanordnung 40 kann aber auch um 180° gedreht verwendet werden, so daß der erste Hydraulikanschluß 46 an den Nehmerzylinder 14 angeschlossen ist, während der zweite Hydraulikanschluß 50 mit dem Geberzylinder 12 verbunden ist.

Die Ventilanordnung 40 hat des weiteren zwei Ventilkörper 52, 54, die zwischen den Hydraulikanschlüssen 46, 50 in dem Gehäuse 42, genauer zwischen dem Grundteil 44 und dem Einsteckteil 48 des Gehäuses 42 aufgenommen sind. Hierbei ist der kolbenartige erste Ventilkörper 52 (in den Fig. 13 bis 16 einzeln gezeigt) mittels eines ersten Federelements 56 in Form einer Schraubendruckfeder in einer ersten Richtung, d.h. in den Fig. 2 bis 7 nach unten gegen einen gehäusefesten Anschlag vorgespannt, der durch eine in diesen Figuren obere, ringförmige Stirnfläche 58 des Einsteckteils 48 ausgebildet ist. Diese Grund- oder Ruhestellung des ersten Ventilkörpers 52 ist in den Fig. 2, 3, 6 und 7 dargestellt. Ferner weist der erste Ventilkörper 52 einen zentralen Durchgangsweg 60 für die Hydraulikflüssigkeit auf und besitzt auf seiner dem zweiten Ventilkörper 54 zugewandten Seite einen Ventilsitz 62 für den zweiten Ventilkörper 54.

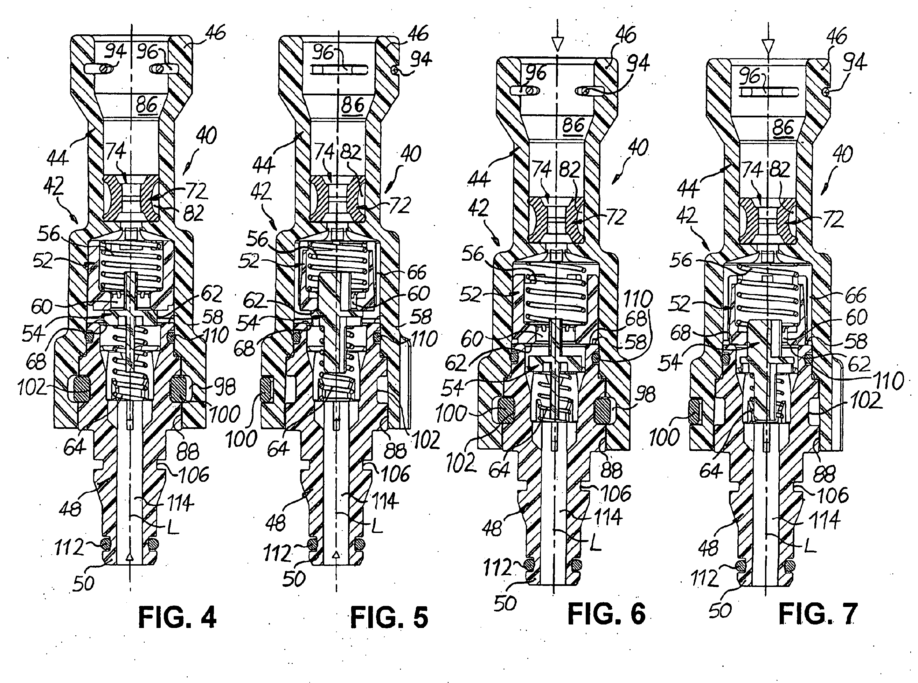

Der stößelartige zweite Ventilkörper 54 (in den Fig. 17 bis 20 separat gezeigt) ist mittels eines zweiten Federelements 64 in Form einer Schraubendruckfeder in einer bezüglich der ersten Richtung entgegengesetzten zweiten Richtung, d.h. in den Fig. 2 bis 7 nach oben gegen den Ventilsitz 62 am ersten Ventilkörper 52 vorgespannt. Im Ergebnis verschließt der zweite Ventilkörper 54 in der in den Fig. 2 und 3 dargestellten Grundstellung der Ventilanordnung 40 den zentralen Durchgangsweg 60 für die Hydraulikflüssigkeit im ersten Ventilkörper 52. Kommt es hingegen bei einer Betätigung des Geberzylinders 12 zu einem Volumenstrom in der ersten Richtung, d.h. über den ersten Hydraulikanschluß 46, so hebt der zweite Ventilkörper 54 gegen die Kraft des zweiten Federelements 64 vom Ventilsitz 62 am ersten Ventilkörper 52 ab, um den zentralen Durchgangsweg 60 im ersten Ventilkörper 52 für ein Durchströmen der Ventilanordnung 40 zu öffnen, während der erste Ventilkörper 52 gegen die Stirnfläche 58 des Einsteckteils 48 des Gehäuses 42 gedrückt wird. Dieser Zustand ist in den Fig. 6 und 7 dargestellt.

Im Hinblick auf ein Durchströmen der Ventilanordnung 40 in der zweiten Richtung, d.h. von unten nach oben in den Fig. 2 bis 7 ist, wie insbesondere die Fig. 3, 5 und 7 erkennen lassen, zwischen dem ersten Ventilkörper 52 und dem Gehäuse 42, genauer dem Außenumfang des ersten Ventilkörpers 52 und dem Innenumfang des Grundteils 44 des Gehäuses 42 ein weiterer Durchgangsweg 66 für die Hydraulikflüssigkeit ausgebildet. Ferner ist an der den gehäusefesten Anschlag ausbildenden Stirnfläche 58 ein weiterer Ventilsitz 68 vorgesehen, gegen den der erste Ventilkörper 52 vermittels des ersten Federelements 56 vorgespannt ist. Aus den Fig. 2 bis 7 ist ersichtlich, daß die Dichtfläche des Ventilsitzes 62 am ersten Ventilkörper 52 sowie die Dichtfläche des weiteren Ventilsitzes 68 am Gehäuse 42 zum einen senkrecht zur Verschieberichtung des ersten bzw. zweiten Ventilkörpers 52, 54 stehen, und zum anderen derart konzentrisch angeordnet sind, daß die Dichtflächen der Ventilsitze 62, 68 in der Grundstellung der Ventilanordnung 40 (Fig. 2 und 3) in einer Ebene liegen.

Im Ergebnis verschließt der erste Ventilkörper 52 gemäß den Fig. 2 und 3 in der Grundstellung der Ventilanordnung 40 mit seiner in diesen Figuren unteren Stirnfläche den weiteren Durchgangsweg 66 zwischen dem ersten Ventilkörper 52 und dem Gehäuse 42 im wesentlichen - "im wesentlichen" insofern, als der erste Ventilkörper 52 gemäß den Fig. 3 und 9 an seiner unteren Stirnfläche mit einer in radialer Richtung verlaufenden Ausgleichsnut 70 versehen sein kann, um im Falle einer Vakuumdruckbefüllung der hydraulischen Kupplungsbetätigung 10 das "Ziehen" eines Vakuums in der Hydraulikleitung 16 zu ermöglichen. Kommt es hingegen beim Rücklauf des Ringkolbens 26 im Nehmerzylinder 14 zu einem Volumenstrom in der zweiten Richtung, d.h. über den zweiten Hydraulikanschluß 50, so hebt der erste Ventilkörper 52 gegen die Kraft des ersten Federelements 56 vom weiteren Ventilsitz 68 am Einsteckteil 48 ab, um den weiteren Durchgangsweg 66 für ein Durchströmen der Ventilanordnung 40 zu öffnen, während der zweite Ventilkörper 54 vermittels des zweiten Federelements 64 gegen den Ventilsitz 62 am ersten Ventilkörper 52 gedrückt wird. Dieser Zustand ist in den Fig. 4 und 5 gezeigt.

Aus der obigen Beschreibung ist ersichtlich, daß die Ventilanordnung 40 bei Vorliegen eines Volumenstroms über den ersten Hydraulikanschluß 46 oder bei Vorliegen eines Volumenstroms über den zweiten Hydraulikanschluß 50 öffnet, ohne Volumenstrom hingegen infolge der Vorspannung der Ventilkörper 52, 54 vermittels der Federelemente 56, 64 schließt, um zur Schwingungsentkopplung eine Trennung der Flüssigkeitssäule zu bewirken. Erwähnt sei in diesem Zusammenhang noch, daß im dargestellten Ausführungsbeispiel die dem ersten Hydraulikanschluß 46 zugewandte hydraulische Wirkfläche am zweiten Ventilkörper 54 sowie die Federkraft des zweiten Federelements 64 einerseits und die dem zweiten Hydraulikanschluß 50 zugewandte hydraulische Wirkfläche am ersten Ventilkörper 52 sowie die Federkraft des ersten Federelements 56 andererseits derart aufeinander abgestimmt sind, daß der Öffnungsdruck der Ventilanordnung 40, der z.B. 0,8 bar betragen kann, in beiden Durchströmungsrichtungen etwa gleich ist. Den jeweiligen Erfordernissen des hydraulischen Kraftübertragungssystem entsprechend, an dem die Ventilanordnung zum Einsatz kommen soll, können die hydraulischen Wirkflächen der Ventilkörper und die Federkräfte der Federelemente aber auch anders aufeinander abgestimmt sein, so daß der Öffnungsdruck der Ventilanordnung in der einen Durchströmungsrichtung von dem Öffnungsdruck der Ventilanordnung in der anderen Durchströmungsrichtung verschieden ist.

Um Restschwingungen zu dämpfen bzw. zu reduzieren, die (1.) auftreten können, wenn die Druckamplituden der Druckpulsationen in der Flüssigkeitssäule größer sind als der jeweilige Öffnungsdruck der Ventilanordnung 40, (2.) über die ggf. vorhandene Ausgleichsnut 70 noch übertragen werden können bzw. (3.) durch den infolge eines an der Ventilanordnung 40 anliegenden Volumenstroms geöffneten Durchgangsweg 60 bzw. 66 hindurchlaufen können, ist im dargestellten Ausführungsbeispiel dem ersten Ventilkörper 52 benachbart noch ein Volumenaufnehmer 72 im Gehäuse 42 montiert, der unter Druck elastisch verformbar ist.

Bei dem in den Fig. 21 und 22 näher gezeigten Volumenaufnehmer 72 handelt es sich um ein gummielastisches, im wesentlichen spulenförmiges Element, welches eine eine Durchströmung des Volumenaufnehmers 72 ermöglichende Durchgangsbohrung 74 hat, mit einem mittigen Zylinderabschnitt 76 und zu beiden Seiten des Zylinderabschnitts 76 gelegenen Öffnungstrichtern 78. Außenumfangsseitig ist der bezüglich seiner Längsachse L rotationssymmetrisch und bezüglich einer gedachten, zu der Längsachse L senkrechten Ebene spiegelsymmetrisch ausgebildete Volumenaufnehmer 72 mit einer hohlkehlenförmigen Ringaussparung 80 versehen, die gemäß den Fig. 2 bis 7 zusammen mit dem Gehäuse 42, genauer dessen Grundteil 44 eine ringförmige Luftkammer 82 begrenzt, welche zu beiden Seiten, d.h. in den Fig. 2 bis 7 nach oben bzw. unten durch ringförmige Dichtwulste 84 (siehe die Fig. 21 und 22) des Volumenaufnehmers 72 abgedichtet ist. Die Wirkungsweise dieses Volumenaufnehmers 72 ebenso wie Anordnungsvarianten des Volumenaufnehmers 72 in z.B. der hydraulischen Kupplungsbetätigung 10 - vom Nehmerzylinder 14 aus gesehen vor bzw. hinter den Ventilkörpern 52, 54 - wurden eingangs schon näher erläutert, so daß an dieser Stelle weitere Ausführungen hierzu entbehrlich sind.

Insbesondere aus den Fig. 10 bis 20 ergeben sich weitere Details der Hauptbestandteile der Ventilanordnung 40, namentlich des Grundteils 44 des Gehäuses 42 (Fig. 10 und 11), des Einsteckteils 48 des Gehäuses 42 (Fig. 12), des ersten Ventilkörpers 52 (Fig. 13 bis 16) und des zweiten Ventilkörpers 54 (Fig. 17 bis 20), welche im dargestellten Ausführungsbeispiel sämtlich aus einem geeigneten Kunststoff, etwa einem glasfaserverstärkten PA 66 spritzgegossen sind und dementsprechend jeweils im wesentlichen konstante Wandstärken sowie geeignete Ausformschrägen aufweisen.

So ist das Grundteil 44 des Gehäuses 42 ausgehend von beiden Stirnseiten mit jeweils einer gestuften Sackbohrung 86, 88 versehen, die jeweils an einem Boden 90 enden, durch den eine zentrale Verbindungsbohrung 92 hindurch verläuft, welche die Sackbohrungen 86, 88 miteinander verbindet. Die in Fig. 10 obere Sackbohrung 86 dient, wie die Fig. 2 bis 7 zeigen, zum einen der engen Aufnahme des Volumenaufnehmers 72, der gemäß den Fig. 2 bis 7 an der oberen Seite des Bodens 90 anliegt; zum anderen der Aufnahme eines Steckteils (nicht dargestellt) der Hydraulikleitung 16, welches in der Sackbohrung 86 in an sich bekannter Weise vermittels eines Sicherungselements 94 aus Federstahldraht, das einen quer zur Längsachse L verlaufenden Steckschlitz 96 im Grundteil 44 durchgreift, gesichert werden kann.

Die in Fig. 10 untere Sackbohrung 88 dient, ausgehend vom Boden 90 gesehen, zunächst der Aufnahme und axialen Führung des ersten Ventilkörpers 52, der mittels des erstes Federelements 56 in den Fig. 2 bis 7 nach unten vorgespannt ist, wobei sich das erste Federelement 56 am Boden 90 abstützt; des weiteren der Aufnahme des Einsteckteils 48 derart, daß die Ventilkörper 52, 54 und die Federelemente 56, 64 zwischen dem Grundteil 44 und dem Einsteckteil 48 angeordnet sind. Wie insbesondere die Fig. 2, 8, 10 und 11 zeigen, ist das Grundteil 44 des Gehäuses 42 auch im Bereich der unteren Sackbohrung 88 nahe seiner Stirnseite mit einem sich quer zur Längsachse L erstreckenden Steckschlitz 98 versehen, welcher der Aufnahme eines im dargestellten Ausführungsbeispiel ebenfalls aus Kunststoff bestehenden, im wesentlichen U-förmigen Sicherungselements 100 dient. Hierbei wirkt, wie insbesondere in der Fig. 8 zu erkennen ist, das elastisch auffederbare, sich quer über die Sackbohrung 88 erstreckende Sicherungselement 100 analog dem Sicherungselement 94 mit einer Radialnut 102 am Außenumfang des Einsteckteils 48 zusammen, um letzteres in axialer Richtung in der Sackbohrung 88 des Grundteils 44 zu sichern.

Gemäß insbesondere Fig. 12 ist das Einsteckteil 48 außenumfangsseitig mit weiteren Radialnuten 104, 106, 108 versehen. Hiervon dienen die Radialnuten 104 und 108, wie aus den Fig. 2 bis 7 ersichtlich, der Aufnahme von O-Ringen 110 bzw. 112, von denen der in den Fig. 2 bis 7 obere O-Ring 110 die Steckverbindung des Gehäuses 42, d.h. von Grundteil 44 und Einsteckteil 48 nach außen abdichtet. Mittels des in den Fig. 2 bis 7 unteren O-Rings 112 erfolgt eine Abdichtung einer an sich bekannten Steckverbindung zu einem Aufnahmeteil (nicht gezeigt), welches an der Hydraulikleitung 16 angebracht ist. In dieses analog dem in Fig. 10 oberen Abschnitt des Grundteils 44 ausgebildete Aufnahmeteil ist der in Fig. 12 untere, außenumfangsseitig mit einer Steckanschlußkontur versehene Abschnitt des Einsteckteils 48 einsteckbar, wo er vermittels eines dem Sicherungselement 94 entsprechenden Sicherungselements (nicht dargestellt), das in die Radialnut 106 eingreift, gegen ein axiales Ausziehen gesichert werden kann.

Ferner ist das Einsteckteil 48 mit einer gestuften Durchgangsbohrung 114 versehen, in deren in Fig. 12 oberen Abschnitt gemäß den Fig. 2 bis 7 von unten nach oben gesehen zunächst das zweite Federelement 64 und dann der zweite Ventilkörper 54 aufgenommen sind. Hierbei stützt sich das zweite Federelement 64 an in Kreuzanordnung in der Durchgangsbohrung 114 vorgesehenen Stegen 116 (siehe die Fig. 8 und 12) ab. Weitere, kreuzförmig angeordnete und bezüglich der Stege 116 um 45° winkelversetzte Stege 118 (vergl. wiederum die Fig. 8 und 12) zentrieren das zweite Federelement 64 in der Durchgangsbohrung 114.

Gemäß den Fig. 13 bis 16 ist der erste Ventilkörper 52 im wesentlichen topfförmig ausgebildet, mit einem Boden 120, an dessen Stirnseite sich der Ventilsitz 62 für den zweiten Ventilkörper 54 befindet, und einer sich vom Boden 120 wegerstreckenden Außenwand 122. Wie in den Fig. 2 bis 7 zu erkennen ist, erstreckt sich das erste Federelement 56 in den ersten Ventilkörper 52 hinein, wo es am Boden 120 des ersten Ventilkörpers 52 anliegt. Auch der Boden 120 des ersten Ventilkörpers 52 ist mit einer Durchgangsbohrung 124 versehen, an deren Innenumfangsfläche der zweite Ventilkörper 54 geführt ist. Außenumfangsseitig, d.h. an seiner Außenwand 122 außen ist der erste Ventilkörper 52 mit einer Mehrzahl von, im dargestellten Ausführungsbeispiel sechs gleichmäßig winkelbeabstandeten Rippen 126 versehen, die in Achsrichtung ausgerichtet sind. Die kronenartig auf der vom Boden 120 abgewandten Seite in axialer Richtung über die Außenwand 122 überstehenden Rippen 126 dienen der Führung des ersten Ventilkörpers 52 in der Sackbohrung 88 des Grundteils 44 des Gehäuses 42 und begrenzen zusammen mit der Wandung der Sackbohrung 88 im Gehäuse 42 den weiteren Durchgangsweg 66 in der Ventilanordnung 40, wie in den Fig. 2 bis 7 zu erkennen ist.

Gemäß den Fig. 17 bis 20 weist der stößelartige zweite Ventilkörper 54 einen mittigen Tellerabschnitt 128 auf, von dem sich in Fig. 18 nach oben ein in der Grundform zylindrischer Zentrieransatz 130 für das zweite Federelement 64 wegerstreckt, während sich in Fig. 18 nach unten ein in der Grundform ebenfalls zylindrischer Führungsansatz 132 an den Tellerabschnitt 128 anschließt. Der Führungsansatz 132 ist - ebenso wie der Zentrieransatz 130 - außenumfangsseitig mit einer Mehrzahl von, im dargestellten Ausführungsbeispiel drei in Längserstreckungsrichtung des zweiten Ventilkörpers 54 verlaufenden, gleichmäßig winkelbeabstandeten und im Querschnitt gesehen runden Ausnehmungen 134 versehen, so daß der Führungsansatz 132 eine ebensolche Anzahl an gemäß Fig. 20 sternförmig angeordneten Stegen 136 aufweist. Die Stege 136 dienen, wie aus den Fig. 2 bis 7 ersichtlich ist, der Führung des zweiten Ventilkörpers 54 in der Durchgangsbohrung 124 im Boden 120 des ersten Ventilkörpers 52 und begrenzen zusammen mit der Wandung der Durchgangsbohrung 124 den (ersten) Durchgangsweg 60 für die Hydraulikflüssigkeit im ersten Ventilkörper 52.

In Fig. 23 ist schließlich der Effekt bzw. die Wirkung der vorbeschriebenen Ventilanordnung 40 gut zu erkennen. Abweichend von dem in Fig. 1 dargestellten Aufbau der hydraulischen Kupplungsbetätigung 10 wurde bei den Versuchen, die diesem Diagramm zugrundeliegen, anstelle des Zentralausrückers 14 ein klassischer Nehmerzylinder mit zylindrischem Kolben und daran angelenkter Kolbenstange verwendet, über die die bereits erwähnte Sinusschwingung in das System eingeleitet wurde. Ohne Verwendung der vorbeschriebenen Ventilanordnung 40 (Kurve mit Rautenmarkierung) waren an der Kolbenstange 20 des Geberzylinders 12 Vibrationen mit erheblichen Beschleunigungen zu messen, insbesondere in den Resonanzfällen, etwa bei Schwingungserregung mit 80 Hz. Mit Verwendung der vorbeschriebenen Ventilanordnung 40 (Kurven mit Kreuzmarkierung) konnten diese Vibrationen, insbesondere bei Frequenzen über 80 Hz, sehr gut vom Geberzylinder 12 abgeschirmt werden. Dieser Effekt ließ sich durch Einsatz des Volumenaufnehmers 72, insbesondere bei Frequenzen unter 80 Hz, sogar noch verbessern, wie ein Vergleich der beiden unteren Kurven (einfache Kreuzmarkierung: ohne Volumenaufnehmer 72; längsgekreuzte Kreuzmarkierung: mit Volumenaufnehmer 72) zeigt.

### BEZUGSZEICHENLISTE

- 10: hydraulische Kupplungsbetätigung
- 12: Geberzylinder
- 14: Nehmerzylinder
- 16: Hydraulikleitung
- 18: Ausgleichsbehälter
- 20: Kolbenstange
- 22: Kupplungspedal
- 24: Getriebewelle
- 26: Ringkolben
- 28: Ausrücklager
- 30: Ausrückmechanismus
- 32: Reibungskupplung
- 34: Kupplungsdruckplatte
- 36: Kupplungsmitnehmerscheibe
- 38: Kurbelwelle
- 40: Ventilanordnung
- 42: Gehäuse
- 44: Grundteil
- 46: erster Hydraulikanschluß
- 48: Einsteckteil
- 50: zweiter Hydraulikanschluß
- 52: erster Ventilkörper
- 54: zweiter Ventilkörper
- 56: erstes Federelement
- 58: Stirnfläche
- 60: Durchgangsweg
- 62: Ventilsitz
- 64: zweites Federelement
- 66: weiterer Durchgangsweg
- 68: weiterer Ventilsitz
- 70: Ausgleichsnut
- 72: Volumenaufnehmer
- 74: Durchgangsbohrung
- 76: Zylinderabschnitt
- 78: Öffnungstrichter
- 80: Ringaussparung
- 82: Luftkammer
- 84: Dichtwulst
- 86: Sackbohrung
- 88: Sackbohrung
- 90: Boden
- 92: Verbindungsbohrung
- 94: Sicherungselement
- 96: Steckschlitz
- 98: Steckschlitz
- 100: Sicherungselement
- 102: Radialnut
- 104: Radialnut
- 106: Radialnut
- 108: Radialnut
- 110: O-Ring
- 112: O-Ring
- 114: Durchgangsbohrung
- 116: Steg
- 118: Steg
- 120: Boden
- 122: Außenwand
- 124: Durchgangsbohrung
- 126: Rippe
- 128: Tellerabschnitt
- 130: Zentrieransatz
- 132: Führungsansatz
- 134: Ausnehmung
- 136: Steg

- L: Längsachse

## Patentansprüche

1. Zwischen einen Geber- und einen Nehmerzylinder (12, 14) eines hydraulischen Kraftübertragungssystems (10) schaltbare Ventilanordnung (40) zur Schwingungsentkopplung, mit einem Gehäuse (42), welches einen ersten und einen zweiten Hydraulikanschluss (46, 50) aufweist, und zwei Ventilkörpern (52, 54), die zwischen den Hydraulikanschlüssen (46, 50) in dem Gehäuse (42) aufgenommen sind, wobei der erste Ventilkörper (52) mittels eines ersten Federelements (56) in einer ersten Richtung gegen einen gehäusefesten Anschlag (58) vorgespannt ist und einen Durchgangsweg (60) für die Hydraulikflüssigkeit aufweist, und wobei der zweite Ventilkörper (54) mittels eines zweiten Federelements (64) in einer bezüglich der ersten Richtung entgegengesetzten zweiten Richtung gegen einen Ventilsitz (62) am ersten Ventilkörper (52) vorgespannt ist, so dass der zweite Ventilkörper (54) in einer Grundstellung der Ventilanordnung (40) den Durchgangsweg (60) im ersten Ventilkörper (52) vollständig oder nahezu vollständig verschließt und bei einem Volumenstrom in der ersten Richtung vom Ventilsitz (62) abhebt, um den Durchgangsweg (60) für ein Durchströmen der Ventilanordnung (40) zu öffnen, wobei zwischen dem ersten Ventilkörper (52) und dem Gehäuse (42) ein weiterer Durchgangsweg (66) für die Hydraulikflüssigkeit vorgesehen ist und wobei am gehäusefesten Anschlag (58) ein weiterer Ventilsitz (68) ausgebildet ist, gegen den der erste Ventilkörper (52) vorgespannt ist, so dass der erste Ventilkörper (52) in der Grundstellung der Ventilanordnung (40) den weiteren Durchgangsweg (66) vollständig oder nahezu vollständig verschließt und bei einem Volumenstrom in der zweiten Richtung vom weiteren Ventilsitz (68) abhebt, um den weiteren Durchgangsweg (66) für ein Durchströmen der Ventilanordnung (40) zu öffnen, **dadurch gekennzeichnet, dass** dem ersten oder dem zweiten Ventilkörper (52, 54) benachbart ein Volumenaufnehmer (72) in einer Bohrung (86) des Gehäuses (42) montiert ist, der unter Druck elastisch verformbar ist, um Restschwingungen zu reduzieren.

2. Ventilanordnung (40) nach Anspruch 1, **dadurch gekennzeichnet, dass** eine Dichtfläche des Ventilsitzes (62) und/oder eine Dichtfläche des weiteren Ventilsitzes (68) senkrecht zu einer Verschieberichtung des ersten bzw. zweiten Ventilkörpers (52, 54) steht.

3. Ventilanordnung (40) nach Anspruch 2, **dadurch gekennzeichnet, dass** die Dichtfläche des Ventilsitzes (62) und die Dichtfläche des weiteren Ventilsitzes (68) in der Grundstellung der Ventilanordnung (40) in einer Ebene liegen.

4. Ventilanordnung (40) nach einem der vorhergehenden Ansprüche, **dadurch gekennzeichnet, dass** das Gehäuse (42) zweigeteilt ist, mit einem Grundteil (44) und einem darin gesicherten Einsteckteil (48), wobei die Ventilkörper (52, 54) und die Federelemente (56, 64) zwischen dem Grundteil (44) und dem Einsteckteil (48) angeordnet sind.

5. Ventilanordnung (40) nach Anspruch 4, **dadurch gekennzeichnet, dass** das Einsteckteil (48) mit einer Stirnfläche (58) den gehäusefesten Anschlag für den ersten Ventilkörper (52) ausbildet.

6. Ventilanordnung (40) nach einem der vorhergehenden Ansprüche, **dadurch gekennzeichnet, dass** der zweite Ventilkörper (54) am ersten Ventilkörper (52) geführt ist.

7. Ventilanordnung (40) nach Anspruch 6, **dadurch gekennzeichnet, dass** der zweite Ventilkörper (54) außenumfangsseitig mit einer Mehrzahl von Stegen (136) versehen ist, die der Führung des zweiten Ventilkörpers (54) in einer Bohrung (124) des ersten Ventilkörpers (52) dienen und zusammen mit der Wandung der Ventilkörperbohrung (124) den Durchgangsweg (60) begrenzen.

8. Ventilanordnung (40) nach einem der vorhergehenden Ansprüche, **dadurch gekennzeichnet, dass** der erste Ventilkörper (52) außenumfangsseitig mit einer Mehrzahl von Rippen (126) versehen ist, die der Führung des ersten Ventilkörpers (52) in einer Bohrung (88) des Gehäuses (42) dienen und zusammen mit der Wandung der Gehäusebohrung (88) den weiteren Durchgangsweg (66) begrenzen.

9. Ventilanordnung (40) nach einem der vorhergehenden Ansprüche, **dadurch gekennzeichnet, dass** es sich bei dem ersten Federelement (56) und/oder dem zweiten Federelement (64) um eine Schraubendruckfeder handelt.

10. Ventilanordnung (40) nach einem der vorhergehenden Ansprüche, **dadurch gekennzeichnet, dass** das Gehäuse (42) bzw. dessen Teile (44, 48) und/oder der erste Ventilkörper (52) und/oder der zweite Ventilkörper (54) aus Kunststoff spritzgegossen ist.

11. Ventilanordnung (40) nach einem der vorhergehenden Ansprüche, **dadurch gekennzeichnet, dass** es sich bei dem Volumenaufnehmer (72) um ein gummielastisches, spulenförmiges Element handelt, mit einer eine Durchströmung des Volumenaufnehmers (72) ermöglichenden Durchgangsbohrung (74) und einer außenumfangsseitigen Ringaussparung (80), die zusammen mit einer Innenumfangsfläche der Gehäusebohrung (86) eine ringförmige Luftkammer (82) begrenzt.

12. Ventilanordnung (40) nach einem der vorhergehenden Ansprüche, **dadurch gekennzeichnet, dass** der Volumenaufnehmer (72) bezüglich einer Längsachse (L) rotationssymmetrisch und bezüglich einer gedachten, zu der Längsachse (L) senkrechten Ebene spiegelsymmetrisch ausgebildet ist.

13. Verwendung einer Ventilanordnung (40) nach einem der vorhergehenden Ansprüche in einem hydraulischen Kraftübertragungssystem (10) mit einem Geberzylinder (12), der über eine Hydraulikleitung (16) mit einem Nehmerzylinder (14) hydraulisch verbunden ist, wobei die Ventilanordnung (40) so in die Hydraulikleitung (16) geschaltet ist, dass der erste Hydraulikanschluss (46) der Ventilanordnung (40) mit dem Geberzylinder (12) und der zweite Hydraulikanschluss (50) der Ventilanordnung (40) mit dem Nehmerzylinder (14) hydraulisch verbunden ist.

14. Verwendung nach Anspruch 13, wobei die Ventilanordnung (40) näher am Nehmerzylinder (14) als am Geberzylinder (12) in die Hydraulikleitung (16) geschaltet ist.

15. Verwendung nach Anspruch 13 oder 14, wobei die Ventilanordnung (40) so positioniert ist, dass der Volumenaufnehmer (72) zwischen dem Nehmerzylinder (14) und den Ventilkörpern (52, 54) im Gehäuse (42) der Ventilanordnung (40) angeordnet ist.

16. Verwendung nach Anspruch 13 oder 14, wobei die Ventilanordnung (40) so positioniert ist, dass der Volumenaufnehmer (72) zwischen dem Geberzylinder (12) und den Ventilkörpern (52, 54) im Gehäuse (42) der Ventilanordnung (40) angeordnet ist.

## Claims

1. Valve arrangement (40) for vibration decoupling, which can be connected between a master cylinder (12) and a slave cylinder (14) of a hydraulic force transmission system (10), said valve arrangement comprising a housing (42), which has a first and a second hydraulic connection (46, 50), and two valve bodies (52, 54), which are accommodated between the hydraulic connections (46, 50) in the housing (42), wherein the first valve body (52) is biased by means of a first spring element (56) in a first direction towards a stop (58) integral with the housing and has a through-path (60) for the hydraulic fluid, and wherein the second valve body (54) is biased by means of a second spring element (64) in a second direction - which is opposite to the first direction - towards a valve seat (62) on the first valve body (52), so that the second valve body (54) in a basic position of the valve arrangement (40) completely or almost completely closes the through-path (60) in the first valve body (52) and, in the event of a volume flow in the first direction, lifts away from the valve seat (62) so as to open the through-path (60) in order to allow the valve arrangement (40) to be flowed through, wherein a further through-path (66) for the hydraulic fluid is provided between the first valve body (52) and the housing (42), and wherein a further valve seat (68) is formed on the stop (58) integral with the housing, towards which further valve seat the first valve body (52) is biased, so that the first valve body (52) in the basic position of the valve arrangement (40) completely or almost completely closes the further through-path (66) and, in the event of a volume flow in the second direction, lifts away from the further valve seat (68) so as to open the further through-path (66) in order to allow the valve arrangement (40) to be flowed through, **characterized in that** a flow transducer (72) is mounted in a bore (86) of the housing (42), adjacent to the first or second valve body (52, 54), which flow transducer can be elastically deformed under pressure in order to reduce residual vibrations.

2. Valve arrangement (40) according to Claim 1, **characterized in that** a sealing face of the valve seat (62) and/or a sealing face of the further valve seat (68) is perpendicular to a displacement direction of the first and/or second valve body (52, 54).

3. Valve arrangement (40) according to Claim 2, **characterized in that** the sealing face of the valve seat (62) and the sealing face of the further valve seat (68) lie in one plane in the basic position of the valve arrangement (40).

4. Valve arrangement (40) according to any of the preceding claims, **characterized in that** the housing (42) is split into two parts, comprising a base part (44) and an insertion part (48) secured therein, wherein the valve bodies (52, 54) and the spring elements (56, 64) are arranged between the base part (44) and the insertion part (48).

5. Valve arrangement (40) according to Claim 4, **characterized in that** an end face (58) of the insertion part (48) forms the stop integral with the housing for the first valve body (52).

6. Valve arrangement (40) according to any of the preceding claims, **characterized in that** the second valve body (54) is guided on the first valve body (52).

7. Valve arrangement (40) according to Claim 6, **characterized in that** the second valve body (54) is provided on its outer circumference with a plurality of webs (136) which serve to guide the second valve body (54) in a bore (124) of the first valve body (52) and together with the wall of the valve body bore (124) delimit the through-path (60).

8. Valve arrangement (40) according to any of the preceding claims, **characterized in that** the first valve body (52) is provided on its outer circumference with a plurality of ribs (126) which serve to guide the first valve body (52) in a bore (88) of the housing (42) and together with the wall of the housing bore (88) delimit the further through-path (66).

9. Valve arrangement (40) according to any of the preceding claims, **characterized in that** the first spring element (56) and/or the second spring element (64) is a helical pressure spring.

10. Valve arrangement (40) according to any of the preceding claims, **characterized in that** the housing (42) or the parts (44, 48) thereof and/or the first valve body (52) and/or the second valve body (54) is injection-molded from plastic.

11. Valve arrangement (40) according to any of the preceding claims, **characterized in that** the flow transducer (72) is a rubber-elastic, spool-shaped element comprising a through-bore (74) which allows the flow transducer (72) to be flowed through and an annular recess (80) on the outer circumference which together with an inner circumferential face of the housing bore (86) forms an annular air chamber (82).

12. Valve arrangement (40) according to any of the preceding claims, **characterized in that** the flow transducer (72) is designed to be rotationally symmetrical with respect to a longitudinal axis (L) and mirror-symmetrical with respect to an imaginary plane perpendicular to the longitudinal axis (L).

13. Use of a valve arrangement (40) according to any of the preceding claims in a hydraulic force transmission system (10) comprising a master cylinder (12) which is hydraulically connected to a slave cylinder (14) via a hydraulic line (16), wherein the valve arrangement (40) is connected into the hydraulic line (16) in such a way that the first hydraulic connection (46) of the valve arrangement (40) is hydraulically connected to the master cylinder (12) and the second hydraulic connection (50) of the valve arrangement (40) is hydraulically connected to the slave cylinder (14).

14. Use according to Claim 13, wherein the valve arrangement (40) is connected into the hydraulic line (16) closer to the slave cylinder (14) than to the master cylinder (12).

15. Use according to Claim 13 or 14, wherein the valve arrangement (40) is positioned in such a way that the flow transducer (72) is arranged between the slave cylinder (14) and the valve bodies (52, 54) in the housing (42) of the valve arrangement (40).

16. Use according to Claim 13 or 14, wherein the valve arrangement (40) is positioned in such a way that the flow transducer (72) is arranged between the master cylinder (12) and the valve bodies (52, 54) in the housing (42) of the valve arrangement (40).

## Revendications

1. Agencement de valves (40) pour le découplage de vibrations, qui peut être monté entre un maître-cylindre et un cylindre récepteur (12, 14) d'un système hydraulique de transmission de force (10), et comprend un carter (42) présentant un premier et un deuxième raccord de branchement hydraulique (46, 50) et deux corps d'obturation de valve (52, 54) logés dans le carter (42) entre les raccords de branchement hydraulique (46, 50), agencement
dans lequel le premier corps d'obturation de valve (52) est précontraint au moyen d'un premier élément de ressort (56), dans une première direction, contre une butée (58) fixe du carter, et présente un chemin de passage (60) pour le liquide hydraulique,
et dans lequel le deuxième corps d'obturation de valve (54) est précontraint, au moyen d'un deuxième élément de ressort (64), dans une deuxième direction opposée par rapport à ladite première direction, contre un siège de valve (62) sur le premier corps d'obturation de valve (52), de sorte que le deuxième corps d'obturation de valve (54), dans une position de base de l'agencement de valves (40), ferme totalement ou presque totalement le chemin de passage (60) dans le premier corps d'obturation de valve (52), et dans le cas d'un débit volumique dans ladite première direction, se soulève du siège de valve (62), pour ouvrir le chemin de passage (60) et permettre un écoulement de passage à travers l'agencement de valves (40),
dans lequel, par ailleurs, il est prévu entre le premier corps d'obturation de valve (52) et le carter (42), un autre chemin de passage (66) pour le liquide hydraulique,
et dans lequel sur la butée (58) fixe du carter, est formé un autre siège de valve (68) contre lequel est précontraint le premier corps d'obturation de valve (52), de sorte que le premier corps d'obturation de valve (52), dans la position de base de l'agencement de valves (40), ferme totalement ou presque totalement ledit autre chemin de passage (66), et dans le cas d'un débit volumique dans ladite deuxième direction, se soulève dudit autre siège de valve (68), pour ouvrir ledit autre chemin de passage (66) et permettre un écoulement de passage à travers l'agencement de valves (40),
**caractérisé en ce qu'**au voisinage du premier ou du deuxième corps d'obturation de valve (52, 54), dans un alésage (86) du carter (42), est monté un absorbeur de volume (72), qui est déformable sous l'effet de la pression, pour réduire des vibrations ou oscillations résiduelles.

2. Agencement de valves (40) selon la revendication 1, **caractérisé en ce que** la surface d'étanchéité du siège de valve (62) et/ou une surface d'étanchéité dudit autre siège de valve (68) est ou sont perpendiculaires à une direction de coulissement du premier, respectivement du deuxième corps d'obturation de valve (52, 54).

3. Agencement de valves (40) selon la revendication 2, **caractérisé en ce que** la surface d'étanchéité du siège de valve (62) et la surface d'étanchéité dudit autre siège de valve (68) se situent dans un même plan, pour la position de base de l'agencement de valves (40).

4. Agencement de valves (40) selon l'une des revendications précédentes, **caractérisé en ce que** le carter (42) est divisé en deux parties, avec une partie de base (44) et une partie emmanchée (48) qui y est logée de manière arrêtée sécurisée, les corps d'obturation de valve (52, 54) et les éléments de ressort (56, 64) étant agencés entre la partie de base (44) et la partie emmanchée (48).

5. Agencement de valves (40) selon la revendication 4, **caractérisé en ce que** la partie emmanchée (48) forme, avec une surface frontale (58), la butée fixe du carter pour le premier corps d'obturation de valve (52).

6. Agencement de valves (40) selon l'une des revendications précédentes, **caractérisé en ce que** le deuxième corps d'obturation de valve (54) est guidé sur le premier corps d'obturation de valve (52).

7. Agencement de valves (40) selon la revendication 6, **caractérisé en ce que** le deuxième corps d'obturation de valve (54) est pourvu, sur le côté périphérique extérieur, d'une pluralité de nervures (136), qui servent au guidage du deuxième corps d'obturation de valve (54) dans un alésage (124) du premier corps d'obturation de valve (52), et délimitent, en commun avec la paroi de l'alésage de corps d'obturation de valve (124), le chemin de passage (60).

8. Agencement de valves (40) selon l'une des revendications précédentes, **caractérisé en ce que** le premier corps d'obturation de valve (52) est pourvu, sur le côté périphérique extérieur, d'une pluralité d'ailettes (126), qui servent au guidage du premier corps d'obturation de valve (52) dans un alésage (88) du carter (42), et délimitent, en commun avec la paroi de l'alésage de carter (88), ledit autre chemin de passage (66).

9. Agencement de valves (40) selon l'une des revendications précédentes, **caractérisé en ce qu'**il s'agit, en ce qui concerne le premier élément de ressort (56) et/ou le deuxième élément de ressort (64), d'un ressort hélicoïdal de compression.

10. Agencement de valves (40) selon l'une des revendications précédentes, **caractérisé en ce que** le carter (42) ou ses parties (44, 48), et/ou le premier corps d'obturation de valve (52) et/ou le deuxième corps d'obturation de valve (54) sont moulés par injection, en matière plastique.

11. Agencement de valves (40) selon l'une des revendications précédentes, **caractérisé en ce qu'**il s'agit, en ce qui concerne l'absorbeur de volume (72), d'un élément en forme de bobine, à élasticité du type caoutchouc, qui présente un alésage de passage (74) permettant le passage d'un écoulement à travers l'absorbeur de volume (72), et un évidement annulaire (80) sur la périphérie extérieure, qui délimite, en commun avec une surface périphérique intérieure de l'alésage de carter (86), une chambre d'air (82) de forme annulaire.

12. Agencement de valves (40) selon l'une des revendications précédentes, **caractérisé en ce que** l'absorbeur de volume (72) est d'une configuration à symétrie de révolution par rapport à un axe longitudinal (L), et de configuration symétrique par rapport à un plan fictif perpendiculaire à l'axe longitudinal (L).

13. Utilisation d'un agencement de valves (40) selon l'une des revendications précédentes, dans un système hydraulique de transmission de force (10) comprenant un maître-cylindre (12), qui est relié hydrauliquement à un cylindre récepteur (14) par l'intermédiaire d'une conduite hydraulique (16), utilisation d'après laquelle l'agencement de valves (40) est monté dans la conduite hydraulique (16) de façon telle que le premier raccord de branchement hydraulique (46) de l'agencement de valves (40) soit relié hydrauliquement au maître-cylindre (12), et que le deuxième raccord de branchement hydraulique (50) de l'agencement de valves (40) soit relié hydrauliquement au cylindre récepteur (14).

14. Utilisation selon la revendication 13, d'après laquelle l'agencement de valves (40) est monté dans la conduite hydraulique (16) de façon plus proche du cylindre récepteur (14) que du maître-cylindre (12).

15. Utilisation selon la revendication 13 ou la revendication 14, d'après laquelle l'agencement de valves (40) est positionné de façon à ce que l'absorbeur de volume (72) soit agencé entre le cylindre récepteur (14) et les corps d'obturation de valve (52, 54), dans le carter (42) de l'agencement de valves (40).

16. Utilisation selon la revendication 13 ou la revendication 14, d'après laquelle l'agencement de valves (40) est positionné de façon à ce que l'absorbeur de volume (72) soit agencé entre le maître-cylindre (12) et les corps d'obturation de valve (52, 54), dans le carter (42) de l'agencement de valves (40).
